# EUROPEAN PATENT SPECIFICATION

(11) **EP 4 611 083 B1**
(45) Date of publication and mention of the grant of the patent: **11.11.2026**
(21) Application number: 24305309.7
(22) Date of filing: 27.02.2024
(51) Int. Cl.: H01M 8/243, H01M 8/2483, H01M 8/2485, H01M 8/249, H01M 8/00, H01M 8/12

(54) **RING-SHAPED SOLID OXIDE FUEL CELL ASSEMBLY FOR AN AIRCRAFT ENGINE**
RINGFÖRMIGE FESTOXIDBRENNSTOFFZELLENANORDNUNG FÜR EIN FLUGZEUGTRIEBWERK
ENSEMBLE DE PILE À COMBUSTIBLE À OXYDE SOLIDE ANNULAIRE POUR MOTEUR D'AÉRONEF

(43) Date of publication of application: 03.09.2025
(73) Proprietor: Airbus SAS, 31700 Blagnac Cedex (FR); Airbus Operations (S.A.S.), 31060 Toulouse Cedex 9 (FR); Airbus Operations GmbH, 21129 Hamburg (DE)
(72) Inventor: AHILAN, Vignesh, 21129 HAMBURG (DE); KIERBEL, Daniel, 31700 BLAGNAC (FR); ROUX, Paul-Emile, 31060 TOULOUSE (FR)
(74) Representative: Cabinet Le Guen Maillet

(56) References cited:
- US-A1- 2004 175 605
- US-A1- 2014 047 814
- US-A1- 2015 004 520

## Description

### TECHNICAL FIELD

The invention relates to ring-shaped solid oxide fuel cell assembly for an aircraft engine, a stack comprising several such fuel cell assemblies, an aircraft engine comprising such a stack as well as an aircraft comprising such an aircraft engine.

### BACKGROUND OF THE INVENTION

Propulsion for transport or passenger aircraft is typically provided by jet or combustion engines using hydrocarbon-based fuel, which leads to a certain carbon footprint. Such engine comprises a front air inlet in which the air is introduced in the engine.

The air is compressed in a compressor just behind the air inlet and injected into a combustion chamber with hydrocarbon fuel. The gases emitted by combustion are ejected by an ejection nozzle via a turbine. The passage of gases in the turbine makes it rotate.

The turbine and compressor are attached to a motor shaft and the rotation of the turbine rotates the compressor.

To reduce the hydrocarbon-based fuel consumption, it is known to use hydrogen as fuel and it is also known to use solid oxide fuel cell to generate an electric current.

EP 2 700 120 A1 (US 2014/047814 A1) discloses an engine comprising a combustion chamber for combusting a fuel/air mixture, and a solid oxide fuel cell device, wherein the fuel cell device comprises at least one fuel cell which in each case comprises an anode that is couplable to a fuel line, a cathode that is couplable to an air source, and a fluid outlet, and is arranged upstream of the combustion chamber. The combustion chamber comprises a combustion chamber inlet for supplying the fuel/air mixture, and a combustion chamber outlet for discharging exhaust gas, and the combustion chamber inlet is connected to the fluid outlet of the fuel cell device. Even if this engine works properly, its efficiency can be improved.

### SUMMARY OF THE INVENTION

An object of the present invention is to propose a ring-shaped solid oxide fuel cell assembly for an aircraft engine where this fuel cell assembly has an improved efficiency.

For this purpose, a ring-shaped solid oxide fuel cell assembly for an aircraft engine is proposed, the fuel cell assembly comprising:
- a ring-shaped inner manifold arranged around a longitudinal axis and comprising a central recess for accommodating an engine shaft of the aircraft engine,
- a ring-shaped outer manifold arranged coaxially around the inner manifold, wherein one of the manifolds comprises at least one hydrogen inlet and the other of the manifolds comprises at least one hydrogen outlet,
- a plurality of tubular solid oxide fuel cells arranged radially with respect to the longitudinal axis between the inner manifold and the outer manifold, wherein each fuel cell comprises an anode in the form of an inner tube, an inner end of which being fluidly connected to the inner manifold and an outer end of which being fluidly connected to the outer manifold, a cathode in the form of an outer porous tube around the anode and between the anode and the cathode, an electrolyte, and
- for each fuel cell, an inner electrical contact electrically connected at the inner end of said fuel cell to one of the anode or the cathode of said fuel cell, and an outer electrical contact electrically connected at the outer end of said fuel cell to the other of the cathode or the anode of said fuel cell.

With such arrangement, the packaging density and total power are improved. Advantageously, the ring-shaped solid oxide fuel cell assembly comprises:
- at least one ring-shaped additional inner manifold arranged coaxially around an outer manifold,
- for each at least one ring-shaped additional inner manifold, a ring-shaped additional outer manifold arranged coaxially around said at least one ring-shaped additional inner manifold, wherein one of the additional manifolds comprises at least one hydrogen inlet and the other of the additional manifolds comprises at least one hydrogen outlet,
- a plurality of tubular solid oxide additional fuel cells arranged radially with respect to the longitudinal axis between the at least one ring-shaped additional inner manifold and the corresponding ring-shaped additional outer manifold, wherein each additional fuel cell comprises an anode in the form of an inner tube, an inner end of which being fluidly connected to the additional inner manifold and an outer end of which being fluidly connected to the additional outer manifold, a cathode in the form of an outer porous tube around the anode and between the anode and the cathode, an electrolyte, and
- for each additional fuel cell, an inner electrical contact electrically connected at the inner end of said additional fuel cell to one of the anode or the cathode of said additional fuel cell, and an outer electrical contact electrically connected at the outer end of said additional fuel cell to the other of the cathode or the anode of said additional fuel cell.

Advantageously, all the inner electrical contacts are electrically connected to an anode and all the outer electrical contacts are electrically connected to a cathode.

Advantageously, the electrical contacts are arranged in an alternative manner around the longitudinal axis, for a first fuel cell, an inner electrical contact is electrically connected to the anode of said first fuel cell and an outer electrical contact is electrically connected to the cathode of said first fuel cell, and for the two fuel cells on each side of said first fuel cell, an inner electrical contact is electrically connected to the cathode of each said two fuel cells and an outer electrical contact is electrically connected to the anode of said two fuel cells.

The invention proposes also a stack for an aircraft engine comprising several ring-shaped solid oxide fuel cell assemblies according to one of preceding embodiments, the fuel cell assemblies being arranged one after the other along the longitudinal axis.

Advantageously, for each pair of two successive fuel cell assemblies, the stack comprises a heat exchanger arranged between the two fuel cell assemblies and comprising an additional central recess for accommodating the engine shaft of the aircraft engine.

Advantageously, the stack comprises hydrogen pipes fluidly connected between the manifold of a fuel cell assembly comprising a hydrogen inlet and the hydrogen inlet of the manifold of the next fuel cell assembly along the longitudinal axis.

Advantageously, the stack comprises residual pipes fluidly connected between the manifold of a fuel cell assembly comprising a hydrogen outlet and the hydrogen outlet of the manifold of the previous fuel cell assembly along the longitudinal axis.

The invention proposes also an aircraft engine comprising an engine shaft coaxial with the longitudinal axis, a hydrogen main pipe, a residual main pipe, an additional hydrogen main pipe, a combustion chamber and a stack according to one of the preceding embodiments, wherein the engine shaft is arranged in each ring-shaped inner manifold, wherein the hydrogen main pipe is fluidly connected to each hydrogen inlet of the stack, wherein the residual main pipe is fluidly connected between each hydrogen outlet of the stack and the combustion chamber and wherein the additional hydrogen main pipe is fluidly connected between the manifolds of the stack having a hydrogen inlet and the combustion chamber. The invention proposes also an aircraft comprising a hydrogen tank and at least one aircraft engine according to the preceding embodiment wherein the hydrogen tank is fluidly connected to the hydrogen main pipe.

### BRIEF DESCRIPTION OF THE DRAWINGS

The above mentioned features of the invention, along with others, will become more clearly apparent upon reading the following description of one exemplary embodiment, said description being given with reference to the appended drawings, in which:
Fig. 1 is a side view of an aircraft according to the invention,
Fig. 2 is a schematic view of an aircraft engine according to the invention,
Fig. 3 is a perspective view of a tubular solid oxide fuel cell used in the aircraft engine according to the invention,
Fig. 4 is a perspective view of a stack according to an embodiment of the invention,
Fig. 5 is a perspective view of a stack according to another embodiment of the invention, and
Fig. 6 is a perspective view of a ring-shaped solid oxide fuel cell assembly according to the invention.

### DETAILED DESCRIPTION OF EXEMPLARY EMBODIMENTS

In the following description, and by convention, X is the longitudinal axis of the aircraft engine, Y is the transverse axis, which is horizontal when the aircraft is on the ground, and Z is the vertical axis, which is vertical when the aircraft is on the ground, these three axis X, Y and Z being mutually orthogonal.

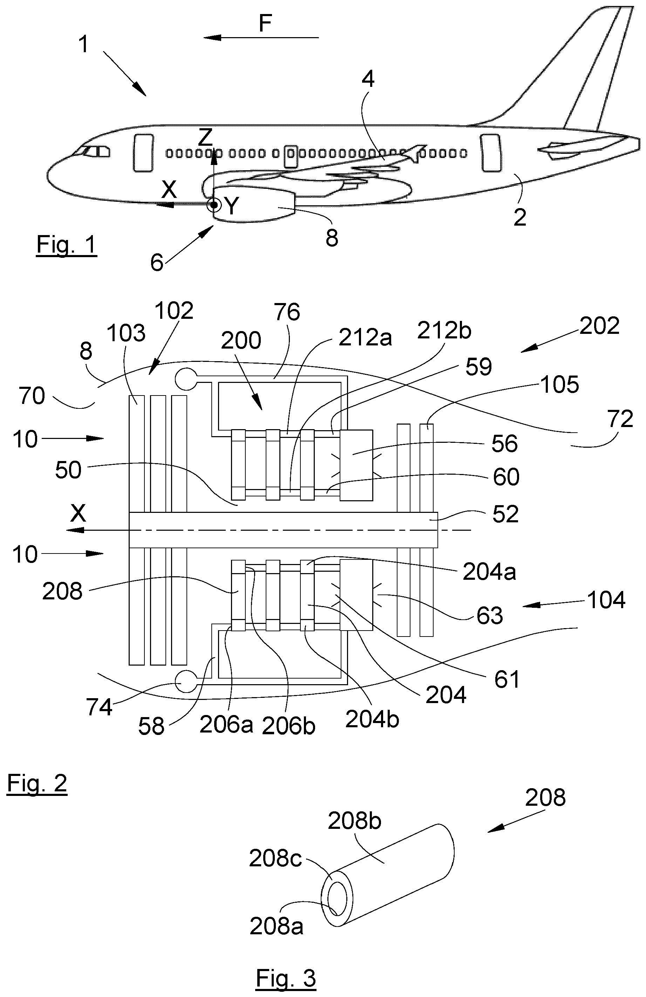

In the following description, the terms relating to a position are taken in reference to an aircraft in the forward position, as it is shown in Fig. 1 where arrow F shows the direction of advance of the aircraft.

Fig. 1 shows an aircraft 1 with a fuselage 2 and wings 4 attached on each side of the fuselage 2. At least one propulsion unit 6 is fixed under each wing 4. Each propulsion unit 6 includes a nacelle 8 and an aircraft engine 202 surrounded by the nacelle 8.

Fig. 2 shows the aircraft engine 202 in a schematic sectional drawing. The air flow 10 enters in the aircraft engine 202 through an air inlet 70 at a front side of the aircraft engine 202 and goes through the aircraft engine 202 to be expulsed at a rear side of the aircraft engine 202 through a nozzle 72. The air flow 10 flows inside the nacelle 8.

The aircraft engine 202 comprises an engine shaft 52 coaxial with the longitudinal axis X. From the front to the rear, the aircraft engine 202 comprises a compressor unit 102, a stack 200, a combustion chamber 56 and a turbine unit 104. The stack 200 and the combustion chamber 56 are attached to a structure of the aircraft engine 202 and the compressor unit 102 and the turbine unit 104 are coupled to the engine shaft 52 and are mobile in rotation around the longitudinal axis X.

The compressor unit 102 has here three compressor wheels 103 arranged one behind each other and coupled on the engine shaft 52. The compressor unit 102 receives air from the air inlet 70 and compresses it. A part of the compressor wheels 103 may be realized in the form of a fan.

The stack 200 comprises several ring-shaped solid oxide fuel cell assemblies 204 which are arranged one after the other along the longitudinal axis X.

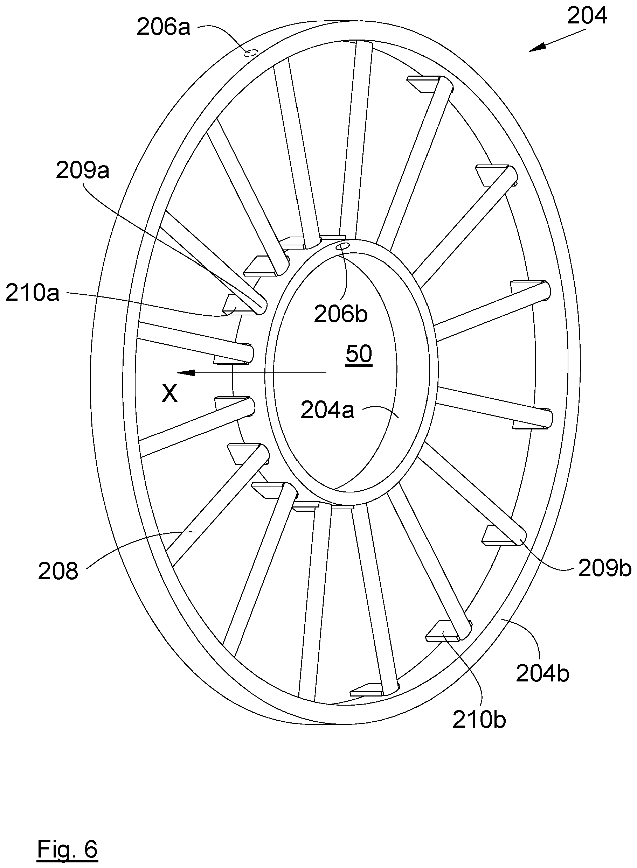

Fig. 6 shows a ring-shaped solid oxide fuel cell assembly 204 according to the invention and it comprises a ring-shaped inner manifold 204a arranged around the longitudinal axis X and comprising a central recess 50 for accommodating the engine shaft 52 and a ring-shaped outer manifold 204b arranged coaxially around the inner manifold 204a.

Each manifold 204a-b is a hollow and sealed body. The fuel cell assembly 204 is arranged in the air flow 10.

One of the manifolds (here the outer manifold 204b) comprises at least one hydrogen inlet 206a through which hydrogen can enter in said manifold 204b and the other of the manifolds (here the inner manifold 204a) comprises at least one hydrogen outlet 206b through which residual hydrogen goes through from said manifold 204a. Here the hydrogen inlet 206a and the hydrogen outlet 206b are on different sides of the fuel cell assembly 204. The hydrogen inlet 206a is at the front side and the hydrogen outlet 206b is at the rear side.

The positions of the hydrogen inlet 206a and of the hydrogen outlet 206b are not fixed, and the hydrogen inlet 206a can be in the inner manifold 204a and the hydrogen outlet 206b can be in the outer manifold 204b.

The fuel cell assembly 204 comprises also a plurality of tubular solid oxide fuel cells 208 which are arranged radially with respect to the longitudinal axis X between the inner manifold 204a and the outer manifold 204b. Each fuel cell 208 is tubular, i.e. it is a hollow cylinder as represented on Fig. 3. The design of the fuel cell 208 may comprise circular, elliptical, rectangular, polygonal, or other regularly shaped or irregularly shaped cross sections, to which shapes the subject of the invention is not limited.

Each fuel cell 208 comprises an anode 208a in the form of an inner tube, a cathode 208b in the form of an outer tube around the anode 208a and between the anode 208a and the cathode 208b, an electrolyte 208c. The cathode 208b is porous for the oxygen diffusion.

Hydrogen enters into the anode 208a and flows through it, while oxygen of the air enters the fuel cell 208 through pores inside the cathode 208b which is surrounded by the air flow 10. In the fuel cell 208, the oxygen reduction reaction occurs in the porous cathode 208b by accepting electrons and producing oxide ions, which travel through the gas tight electrolyte 208c to the anode 208a. The hydrogen gets oxidized at the anode 208a by accepting oxide ions and producing electrons, which pass to the cathode 208b through an external electrical circuit.

An inner end 209a of the anode 208a is fluidly connected to the inner manifold 204a and an outer end 209b of the anode 208a is fluidly connected to the outer manifold 204b. Hydrogen enters in the outer manifold 204b by the hydrogen inlet 206a, goes through each fuel cell 208 by the corresponding outer end 209b, flows through the anode 208a and until the inner end 209a and enters in the inner manifold 204a until the hydrogen outlet 206b where the residual hydrogen flows out of the fuel cell assembly 204. The fluid connection between the anode 208a and each manifold 204a-b is realized thanks to a hole realized in a wall of said manifold 204a-b wherein the hole opens in the anode 208a.

For each fuel cell 208, an inner electrical contact 210a is electrically connected at the inner end 209a of said fuel cell 208 to one of the anodes 208a or the cathodes 208b of said fuel cell 208.

In the same manner, an outer electrical contact 210b is electrically connected at the outer end 209b of said fuel cell 208 to the other of the cathode 208b or the anode 208a of said fuel cell 208.

The electrical contacts 210a-b are then connected to the external electrical circuit to use the produced electrons in the aircraft 1, for example to store electricity in batteries.

Such arrangement allows a high packing density and power by the fact that the cathodes 208b are in the air flow 10 passing in the nacelle 8 and arranged perpendicular to it.

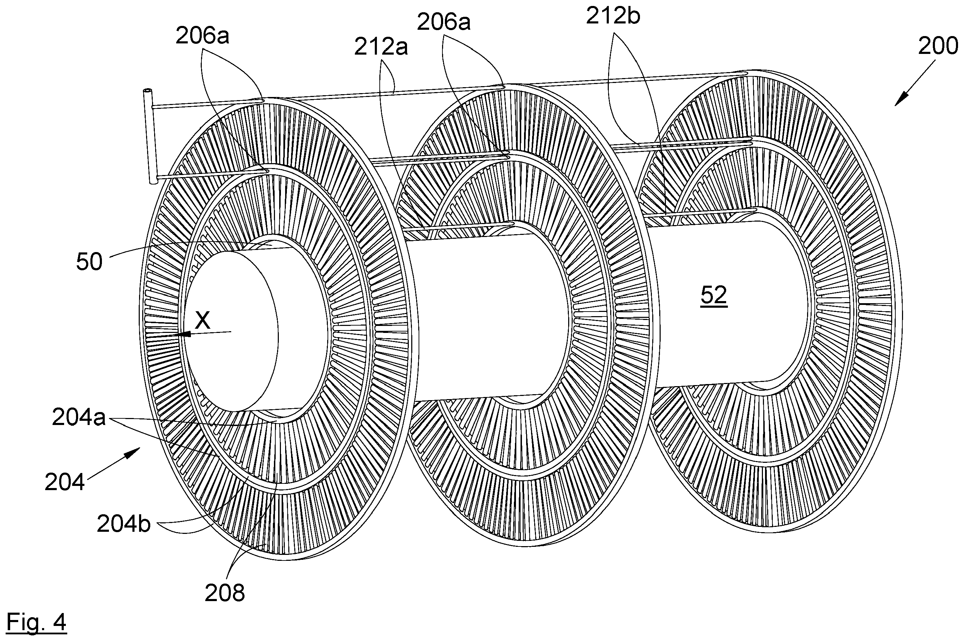

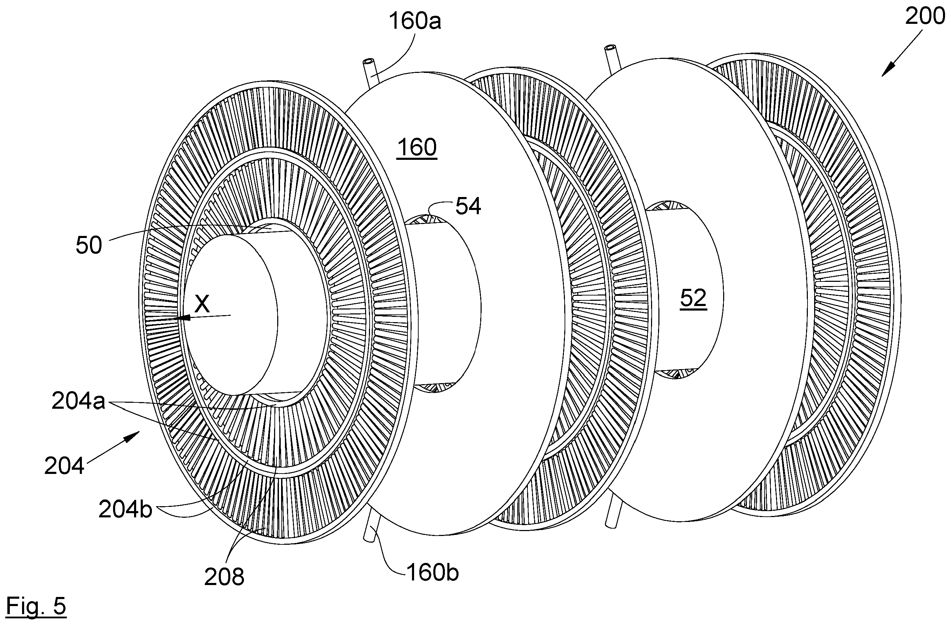

Figs. 4 and 5 show two particular arrangements of the stack 200 in which the fuel cell assemblies 204 are arranged one after the other along the longitudinal axis X.

Hydrogen is stocked in a tank 74 of the aircraft 1 and is delivered directly or indirectly to the hydrogen inlets 206a through a hydrogen main pipe 58 fluidly connected between the tank 74 and all the hydrogen inlets 206a of the stack 200. Here only the hydrogen inlet 206a of the left hand (first) fuel cell assembly 204 is directly connected to the hydrogen main pipe 58, the hydrogen inlets 206a of the other fuel cell assemblies 204 are fluidly connected to the prior fuel cell assembly 204, in particular to the manifold (here the outer manifold 204b) receiving the hydrogen. The prior outer manifold 204b is connected to hydrogen inlet 206a of the next outer manifold 204b through a hydrogen pipe 212a according to the direction of the air flow 10.

In a general manner, hydrogen pipes 212a (not represented on Fig. 5) are fluidly connected between the manifold 204b of a fuel cell assembly 204 comprising a hydrogen inlet 206a and the hydrogen inlet 206a of the manifold 204b of the next fuel cell assembly 204 along the longitudinal axis X and according to the direction of the air flow 10.

In another embodiment not represented, each hydrogen inlets 206a is fluidly connected to a hydrogen main pipe 58.

The residual hydrogen which is not consumed in the fuel cells 208 is expulsed from the inner manifold 204a through the hydrogen outlet 206b and the hydrogen outlets 206b are fluidly connected together thanks to residual pipes 212b (not represented on Fig. 5). The residual pipe 212b is fluidly connected between the manifold 204a of a fuel cell assembly 204 comprising a hydrogen outlet 206b and the hydrogen outlet 206b of the manifold 204a of the previous fuel cell assembly 204 along the longitudinal axis X and according to the direction of the air flow 10.

In the embodiment of Fig. 4, there is one hydrogen pipe 212a and one residual pipe 212b per manifold 204a-b but it is possible to have more.

In an alternative way, the fuel cell assemblies 204 comprise several stages around the engine shaft 52. Here there are two stages around the engine shaft 52 but depending on the available space in the nacelle 8, the number can be greater.

In this embodiment, the fuel cell assembly 204 comprises at least one ring-shaped additional inner manifold 204a arranged coaxially around the previous outer manifold 204b and for each at least one ring-shaped additional inner manifold 204a, a ring-shaped additional outer manifold 204b arranged coaxially around said at least one ring-shaped additional inner manifold 204a.

As previously, one of the additional manifolds 204a-b comprises at least one hydrogen inlet 206a and the other of the additional manifolds 204b-a comprises at least one hydrogen outlet 206b.

The arrangement is similar to the Fig. 6, with a plurality of tubular solid oxide additional fuel cells 208 arranged radially with respect to the longitudinal axis X between the at least one ring-shaped additional inner manifold 204a and the corresponding ring-shaped additional outer manifold 204b and each additional fuel cell 208 has the same form as described for Fig. 3.

The additional fuel cell 208 comprises an anode 208a in the form of an inner tube, an inner end 209a of which is fluidly connected to the additional inner manifold 204a and an outer end 209b of which is fluidly connected to the additional outer manifold 204b, a cathode 208b in the form of an outer porous tube around the anode 208a and between the anode 208a and the cathode 208b, an electrolyte 208c.

For each additional fuel cells 208, an inner electrical contact 210a is electrically connected at the inner end 209a of said additional fuel cells 208 to one of the anode 208a or the cathode 208b of said additional fuel cells 208, and an outer electrical contact 210b is electrically connected at the outer end 209b of said additional fuel cells 208 to the other of the cathode 208b or the anode 208a of said additional fuel cells 208. The electrical contacts 210a-b are then connected to the external electrical circuit.

Downstream the stack 200, the combustion chamber 56 receives hydrogen from the tank 74 through an alimentation pipe 76.

In the proposed embodiment, the combustion chamber 56 receives also hydrogen from the stack 200 through a residual main pipe 60 fluidly connected directly or indirectly to each hydrogen outlet 206b of the stack 200. Here the hydrogen outlet 206b of the right hand (last) fuel cell assembly 204 is directly connected to the residual main pipe 60 and the other hydrogen outlets 206b are fluidly connected to the residual main pipe 60 through the residual pipes 212b.

In the proposed embodiment, the combustion chamber 56 receives also hydrogen from the stack 200 through an additional hydrogen main pipe 59 fluidly connected directly or indirectly to each manifold (here the outer manifold 204b) of the stack 200 having a hydrogen inlet 206a. Here the outer manifold 204b of the right hand (last) fuel cell assembly 204 is directly connected to the additional hydrogen main pipe 59 and the other outer manifolds 204b are fluidly connected to the last outer manifold 204b through the hydrogen pipes 212a. The combustion chamber 56 comprises also an air opening 61 through which the air flow 10 enters in the combustion chamber 56 to ensure the combustion of the hydrogen. The gases produced in the combustion chamber 56 are expulsed from the combustion chamber 56 through output opening 63 provided for that purpose towards the turbine unit 104.

The turbine unit 104 has here two turbine wheels 105 arranged one behind each other and coupled on the engine shaft 52. The expulsed gases make turn the turbine wheels 105 and thus the engine shaft 52 and the compressor wheels 103 and lead to providing mechanical power for the compressor unit 102. The aircraft engine 202 thus produces thrust and electrical power.

In a general manner, the aircraft engine 202 comprises the hydrogen main pipe 58, the residual main pipe 60, the additional hydrogen main pipe 59, the combustion chamber 56 and the stack 200, wherein the engine shaft 52 is arranged in each ring-shaped inner manifold 204a, wherein the hydrogen main pipe 58 is fluidly connected to each hydrogen inlet 206a of the stack 200, wherein the residual main pipe 60 is fluidly connected between each hydrogen outlet 206b of the stack 200 (eventually through the residual pipes 212b) and the combustion chamber 56, and wherein the additional hydrogen main pipe 59 is fluidly connected between the manifolds 204b of the stack 200 having a hydrogen inlet 206a (eventually through the hydrogen pipes 212a) and the combustion chamber 56.

According to a specific embodiment, all the inner electrical contacts 210a are electrically connected to an anode 208a and all the outer electrical contacts 210b are electrically connected to a cathode 208b. In this arrangement, the fuel cells 208 are electrically connected in a parallel manner.

According to another specific embodiment, the fuel cells 208 are electrically connected in a serial manner. The electrical contacts 210a-b are arranged in an alternative manner around the longitudinal axis X. It means that for a first fuel cell 208, an inner electrical contact 210a is electrically connected to the anode 208a of said first fuel cell 208 and an outer electrical contact 210b is electrically connected to the cathode 208b of said first fuel cell 208, and for the two fuel cells 208 on each side of said first fuel cell 208, an inner electrical contact 210a is electrically connected to the cathode 208b of each said two fuel cells 208 and an outer electrical contact 210b is electrically connected to the anode 208a of said two fuel cells 208. In the embodiment of Fig. 5, the stack 200 comprises heat exchangers 160 arranged between two successive fuel cell assemblies 204 to cool the fuel cell assemblies 204.

For each pair of two successive fuel cell assemblies 204, a heat exchanger 160 is arranged between the two fuel cell assemblies 204 and it comprises an additional central recess 54 for accommodating the engine shaft 52 of the aircraft engine 202. The air flow 10 can pass through the additional central recess 54 by the space between the heat exchanger 160 and the engine shaft 52.

The hydrogen pipes 212a and the residual pipes 212b are not represented but they can go through the heat exchangers 160 or around them to warm the hydrogen.

The heat exchangers 160 are loaded with coolant which circulates between a coolant inlet 160a and a coolant outlet 106b.

## Claims

1. Ring-shaped solid oxide fuel cell assembly (204) for an aircraft engine (202), the fuel cell assembly (204) comprising:
- a ring-shaped inner manifold (204a) arranged around a longitudinal axis (X) and comprising a central recess (50) for accommodating an engine shaft (52) of the aircraft engine (202),
- a ring-shaped outer manifold (204b) arranged coaxially around the inner manifold (204a), wherein one of the manifolds (204a-b) comprises at least one hydrogen inlet (206a) and the other of the manifolds (204b-a) comprise at least one hydrogen outlet (206b),
- a plurality of tubular solid oxide fuel cells (208) arranged radially with respect to the longitudinal axis (X) between the inner manifold (204a) and the outer manifold (204b), wherein each fuel cell (208) comprises an anode (208a) in the form of an inner tube, an inner end (209a) of which being fluidly connected to the inner manifold (204a) and an outer end (209b) of which being fluidly connected to the outer manifold (204b), a cathode (208b) in the form of an outer porous tube around the anode (208a) and between the anode (208a) and the cathode (208b), an electrolyte (208c), and
- for each fuel cells (208), an inner electrical contact (210a) electrically connected at the inner end (209a) of said fuel cell (208) to one of the anode (208a) or the cathode (208b) of said fuel cell (208), and an outer electrical contact (210b) electrically connected at the outer end (209b) of said fuel cell (208) to the other of the cathode (208b) or the anode (208a) of said fuel cell (208).

2. Ring-shaped solid oxide fuel cell assembly (204) according to claim 1, **characterized in that** it comprises:
- at least one ring-shaped additional inner manifold (204a) arranged coaxially around an outer manifold (204b),
- for each at least one ring-shaped additional inner manifold (204a), a ring-shaped additional outer manifold (204b) arranged coaxially around said at least one ring-shaped additional inner manifold (204a), wherein one of the additional manifolds (204a-b) comprises at least one hydrogen inlet (206a) and the other of the additional manifolds (204b-a) comprise at least one hydrogen outlet (206b),
- a plurality of tubular solid oxide additional fuel cells (208) arranged radially with respect to the longitudinal axis (X) between the at least one ring-shaped additional inner manifold (204a) and the corresponding ring-shaped additional outer manifold (204b), wherein each additional fuel cell (208) comprises an anode (208a) in the form of an inner tube, an inner end (209a) of which being fluidly connected to the additional inner manifold (204a) and an outer end (209b) of which being fluidly connected to the additional outer manifold (204b), a cathode (208b) in the form of an outer porous tube around the anode (208a) and between the anode (208a) and the cathode (208b), an electrolyte (208c), and
- for each additional fuel cells (208), an inner electrical contact (210a) electrically connected at the inner end (209a) of said additional fuel cell (208) to one of the anode (208a) or the cathode (208b) of said additional fuel cell (208), and an outer electrical contact (210b) electrically connected at the outer end (209b) of said additional fuel cell (208) to the other of the cathode (208b) or the anode (208a) of said additional fuel cell (208).

3. Ring-shaped solid oxide fuel cell assembly (204) to claim 1 or claim 2, **characterized in that** all the inner electrical contacts (210a) are electrically connected to an anode (208a) and **in that** all the outer electrical contacts (210b) are electrically connected to a cathode (208b).

4. Ring-shaped solid oxide fuel cell assembly (204) to claim 1 or claim 2, **characterized in that** the electrical contacts (210a-b) are arranged in an alternative manner around the longitudinal axis (X), **in that** for a first fuel cell (208), an inner electrical contact (210a) is electrically connected to the anode (208a) of said first fuel cell (208) and an outer electrical contact (210b) is electrically connected to the cathode (208b) of said first fuel cell (208), and **in that** for the two fuel cells (208) on each side of said first fuel cell (208), an inner electrical contact (210a) is electrically connected to the cathode (208b) of each said two fuel cells (208) and an outer electrical contact (210b) is electrically connected to the anode (208a) of said two fuel cells (208).

5. Stack (200) for an aircraft engine (202) comprising several ring-shaped solid oxide fuel cell assemblies (204) according to one of the claims 1 to 4, the fuel cell assemblies (204) being arranged one after the other along the longitudinal axis (X).

6. Stack (200) according to claim 5, **characterized in that** for each pair of two successive fuel cell assemblies (204), the stack (200) comprises a heat exchanger (160) arranged between the two fuel cell assemblies (204) and comprising an additional central recess (54) for accommodating the engine shaft (52) of the aircraft engine (202).

7. Stack (200) according to one of the claims 5 or 6, **characterized in that** it comprises hydrogen pipes (212a) fluidly connected between the manifold (204a-b) of a fuel cell assembly (204) comprising a hydrogen inlet (206a) and the hydrogen inlet (206a) of the manifold (204a-b) of the next fuel cell assembly (204) along the longitudinal axis (X).

8. Stack (200) according to one of the claims 5 to 7, **characterized in that** it comprises residual pipes (212b) fluidly connected between the manifold (204a-b) of a fuel cell assembly (204) comprising a hydrogen outlet (206b) and the hydrogen outlet (206b) of the manifold (204a-b) of the previous fuel cell assembly (204) along the longitudinal axis (X).

9. Aircraft engine (202) comprising an engine shaft (52) coaxial with the longitudinal axis (X), a hydrogen main pipe (58), a residual main pipe (60), an additional hydrogen main pipe (59), a combustion chamber (56) and a stack (200) according to one of the claims 5 to 8, wherein the engine shaft (52) is arranged in each ring-shaped inner manifold (204a), wherein the hydrogen main pipe (58) is fluidly connected to each hydrogen inlet (206a) of the stack (200), wherein the residual main pipe (60) is fluidly connected between each hydrogen outlet (206b) of the stack (200) and the combustion chamber (56) and wherein the additional hydrogen main pipe (59) is fluidly connected between the manifolds (204b) of the stack (200) having a hydrogen inlet (206a) and the combustion chamber (56).

10. Aircraft (1) comprising a hydrogen tank (74) and at least one aircraft engine (202) according to claim 9 wherein the hydrogen tank (74) is fluidly connected to the hydrogen main pipe (58).

## Patentansprüche

1. Ringförmige Festoxidbrennstoffzellenanordnung (204) für ein Flugzeugtriebwerk (202), wobei die Brennstoffzellenanordnung (204) Folgendes umfasst:
- einen ringförmigen inneren Verteiler (204a), der um eine Längsachse (X) herum angeordnet ist und eine zentrale Aussparung (50) zur Aufnahme einer Triebwerkswelle (52) des Flugzeugtriebwerks (202) umfasst,
- einen ringförmigen äußeren Verteiler (204b), der koaxial um den inneren Verteiler (204a) angeordnet ist, wobei einer der Verteiler (204a-b) mindestens einen Wasserstoffeinlass (206a) umfasst und der andere der Verteiler (204b-a) mindestens einen Wasserstoffauslass (206b) umfasst,
- eine Mehrzahl von rohrförmigen Festoxidbrennstoffzellen (208), die radial in Bezug auf die Längsachse (X) zwischen dem inneren Verteiler (204a) und dem äußeren Verteiler (204b) angeordnet sind, wobei jede Brennstoffzelle (208) eine Anode (208a) in Form eines inneren Rohrs, deren inneres Ende (209a) mit dem inneren Verteiler (204a) fluidverbunden ist und deren äußeres Ende (209b) mit dem äußeren Verteiler (204b) fluidverbunden ist, eine Kathode (208b) in Form eines äußeren porösen Rohrs um die Anode (208a) herum sowie einen zwischen der Anode (208a) und der Kathode (208b) angeordneten Elektrolyten (208c) umfasst, und
- für jede Brennstoffzelle (208) einen inneren elektrischen Kontakt (210a), der elektrisch am inneren Ende (209a) der Brennstoffzelle (208) mit einer der beiden Elektroden der Brennstoffzelle (208), der Anode (208a) oder der Kathode (208b), verbunden ist, und einen äußeren elektrischen Kontakt (210b), der elektrisch am äußeren Ende (209b) der Brennstoffzelle (208) mit der jeweils anderen der beiden Elektroden der Brennstoffzelle (208), der Kathode (208b) oder der Anode (208a), verbunden ist.

2. Ringförmige Festoxidbrennstoffzellenanordnung (204) nach Anspruch 1, **dadurch gekennzeichnet, dass** sie Folgendes umfasst:
- mindestens einen ringförmigen zusätzlichen inneren Verteiler (204a), der koaxial um einen äußeren Verteiler (204b) angeordnet ist,
- für jeden der mindestens einen ringförmigen zusätzlichen inneren Verteiler (204a) einen ringförmigen zusätzlichen äußeren Verteiler (204b), der koaxial um den mindestens einen ringförmigen zusätzlichen inneren Verteiler (204a) angeordnet ist, wobei einer der zusätzlichen Verteiler (204a-b) mindestens einen Wasserstoffeinlass (206a) umfasst und der andere der zusätzlichen Verteiler (204b-a) mindestens einen Wasserstoffauslass (206b) umfasst,
- eine Mehrzahl von rohrförmigen zusätzlichen Festoxidbrennstoffzellen (208), die radial in Bezug auf die Längsachse (X) zwischen dem mindestens einen ringförmigen zusätzlichen inneren Verteiler (204a) und dem entsprechenden ringförmigen zusätzlichen äußeren Verteiler (204b) angeordnet sind, wobei jede zusätzliche Brennstoffzelle (208) eine Anode (208a) in Form eines inneren Rohrs, deren inneres Ende (209a) mit dem zusätzlichen inneren Verteiler (204a) fluidverbunden ist und deren äußeres Ende (209b) mit dem zusätzlichen äußeren Verteiler (204b) fluidverbunden ist, eine Kathode (208b) in Form eines äußeren porösen Rohrs um die Anode (208a) herum sowie einen zwischen der Anode (208a) und der Kathode (208b) angeordneten Elektrolyten (208c) umfasst, und
- für jede zusätzliche Brennstoffzelle (208) einen inneren elektrischen Kontakt (210a), der elektrisch am inneren Ende (209a) der zusätzlichen Brennstoffzelle (208) mit einer der beiden Elektroden der zusätzlichen Brennstoffzelle (208), der Anode (208a) oder der Kathode (208b), verbunden ist, und einen äußeren elektrischen Kontakt (210b), der elektrisch am äußeren Ende (209b) der zusätzlichen Brennstoffzelle (208) mit der jeweils anderen der beiden Elektroden der zusätzlichen Brennstoffzelle (208), der Kathode (208b) oder der Anode (208a), verbunden ist.

3. Ringförmige Festoxidbrennstoffzellenanordnung (204) nach Anspruch 1 oder Anspruch 2, **dadurch gekennzeichnet, dass** alle inneren elektrischen Kontakte (210a) elektrisch mit einer Anode (208a) verbunden sind und dass alle äußeren elektrischen Kontakte (210b) elektrisch mit einer Kathode (208b) verbunden sind.

4. Ringförmige Festoxidbrennstoffzellenanordnung (204) nach Anspruch 1 oder Anspruch 2, **dadurch gekennzeichnet, dass** die elektrischen Kontakte (210a-b) abwechselnd um die Längsachse (X) angeordnet sind, dass für eine erste Brennstoffzelle (208) ein innerer elektrischer Kontakt (210a) elektrisch mit der Anode (208a) der ersten Brennstoffzelle (208) verbunden ist und ein äußerer elektrischer Kontakt (210b) elektrisch mit der Kathode (208b) der ersten Brennstoffzelle (208) verbunden ist und dass für die beiden Brennstoffzellen (208) auf jeder Seite der ersten Brennstoffzelle (208) ein innerer elektrischer Kontakt (210a) elektrisch mit der Kathode (208b) jeder der beiden Brennstoffzellen (208) verbunden ist und ein äußerer elektrischer Kontakt (210b) elektrisch mit der Anode (208a) der beiden Brennstoffzellen (208) verbunden ist.

5. Stapel (200) für ein Flugzeugtriebwerk (202), der mehrere ringförmige Festoxidbrennstoffzellenanordnungen (204) nach einem der Ansprüche 1 bis 4 umfasst, wobei die Brennstoffzellenanordnungen (204) entlang der Längsachse (X) hintereinander angeordnet sind.

6. Stapel (200) nach Anspruch 5, **dadurch gekennzeichnet, dass** der Stapel (200) für jedes Paar von zwei aufeinanderfolgenden Brennstoffzellenanordnungen (204) einen zwischen den beiden Brennstoffzellenanordnungen (204) angeordneten Wärmetauscher (160) umfasst, der eine zusätzliche zentrale Aussparung (54) zur Aufnahme der Triebwerkswelle (52) des Flugzeugtriebwerks (202) umfasst.

7. Stapel (200) nach einem der Ansprüche 5 oder 6, **dadurch gekennzeichnet, dass** er Wasserstoffrohre (212a) umfasst, die den Verteiler (204a-b) einer Brennstoffzellenanordnung (204), der einen Wasserstoffeinlass (206a) umfasst, fluidisch mit dem Wasserstoffeinlass (206a) des Verteilers (204a-b) der entlang der Längsachse (X) nächsten Brennstoffzellenanordnung (204) verbinden.

8. Stapel (200) nach einem der Ansprüche 5 bis 7, **dadurch gekennzeichnet, dass** er Restrohre (212b) umfasst, die den Verteiler (204a-b) einer Brennstoffzellenanordnung (204), der einen Wasserstoffauslass (206b) umfasst, fluidisch mit dem Wasserstoffauslass (206b) des Verteilers (204a-b) der entlang der Längsachse (X) vorherigen Brennstoffzellenanordnung (204) verbinden.

9. Flugzeugtriebwerk (202), umfassend eine Triebwerkswelle (52), die koaxial zur Längsachse (X) verläuft, ein Wasserstoffhauptrohr (58), ein Resthauptrohr (60), ein zusätzliches Wasserstoffhauptrohr (59), eine Brennkammer (56) und einen Stapel (200) nach einem der Ansprüche 5 bis 8, wobei die Triebwerkswelle (52) in jedem ringförmigen inneren Verteiler (204a) angeordnet ist, wobei das Wasserstoffhauptrohr (58) mit jedem Wasserstoffeinlass (206a) des Stapels (200) fluidverbunden ist, wobei das Resthauptrohr (60) jeden Wasserstoffauslass (206b) des Stapels (200) fluidisch mit der Brennkammer (56) verbindet und wobei das zusätzliche Wasserstoffhauptrohr (59) die Verteiler (204b) des Stapels (200), die einen Wasserstoffeinlass (206a) aufweisen, fluidisch mit der Brennkammer (56) verbindet.

10. Flugzeug (1), umfassend einen Wasserstofftank (74) und mindestens ein Flugzeugtriebwerk (202) nach Anspruch 9, wobei der Wasserstofftank (74) fluidisch mit dem Wasserstoffhauptrohr (58) verbunden ist.

## Revendications

1. Assemblage annulaire de piles à combustible à oxyde solide (204) pour un moteur d'aéronef (202), l'assemblage de piles à combustible (204) comprenant :
- un collecteur annulaire intérieur (204a) agencé autour d'un axe longitudinal (X) et comprenant un évidement central (50) destiné à loger un arbre moteur (52) du moteur d'aéronef (202),
- un collecteur annulaire extérieur (204b) agencé coaxialement autour du collecteur intérieur (204a), l'un des collecteurs (204a-b) comprenant au moins une entrée d'hydrogène (206a) et l'autre des collecteurs (204b-a) comprenant au moins une sortie d'hydrogène (206b),
- une pluralité de piles à combustible à oxyde solide tubulaires (208) agencées radialement par rapport à l'axe longitudinal (X) entre le collecteur intérieur (204a) et le collecteur extérieur (204b), chaque pile à combustible (208) comprenant une anode (208a) sous la forme d'un tube intérieur, dont une extrémité intérieure (209a) est reliée fluidiquement au collecteur intérieur (204a) et dont une extrémité extérieure (209b) est reliée fluidiquement au collecteur extérieur (204b), une cathode (208b) sous la forme d'un tube extérieur poreux autour de l'anode (208a) et un électrolyte (208c) entre l'anode (208a) et la cathode (208b), et
- pour chaque pile à combustible (208), un contact électrique intérieur (210a) relié électriquement, au niveau de l'extrémité intérieure (209a) de ladite pile à combustible (208), à l'une parmi l'anode (208a) et la cathode (208b) de ladite pile à combustible (208), et un contact électrique extérieur (210b) relié électriquement, au niveau de l'extrémité extérieure (209b) de ladite pile à combustible (208), à l'autre parmi la cathode (208b) et l'anode (208a) de ladite pile à combustible (208).

2. Assemblage annulaire de piles à combustible à oxyde solide (204) selon la revendication 1, **caractérisé en ce qu'**il comprend :
- au moins un collecteur annulaire intérieur supplémentaire (204a) agencé coaxialement autour d'un collecteur extérieur (204b),
- pour chacun de l'au moins un collecteur annulaire intérieur supplémentaire (204a), un collecteur annulaire extérieur supplémentaire (204b) agencé coaxialement autour dudit au moins un collecteur annulaire intérieur supplémentaire (204a), l'un des collecteurs supplémentaires (204a-b) comprenant au moins une entrée d'hydrogène (206a) et l'autre des collecteurs supplémentaires (204b-a) comprend au moins une sortie d'hydrogène (206b),
- une pluralité de piles à combustible à oxyde solide tubulaires supplémentaires (208) agencées radialement par rapport à l'axe longitudinal (X) entre l'au moins un collecteur annulaire intérieur supplémentaire (204a) et le collecteur annulaire extérieur supplémentaire (204b) correspondant, chaque pile à combustible supplémentaire (208) comprenant une anode (208a) sous la forme d'un tube intérieur, dont une extrémité intérieure (209a) est reliée fluidiquement au collecteur intérieur supplémentaire (204a) et dont une extrémité extérieure (209b) est reliée fluidiquement au collecteur extérieur supplémentaire (204b), une cathode (208b) sous la forme d'un tube extérieur poreux autour de l'anode (208a) et un électrolyte (208c) entre l'anode (208a) et la cathode (208b), et
- pour chaque pile à combustible supplémentaire (208), un contact électrique intérieur (210a) relié électriquement, au niveau de l'extrémité intérieure (209a) de ladite pile à combustible supplémentaire (208), à l'une parmi l'anode (208a) et la cathode (208b) de ladite pile à combustible supplémentaire (208), et un contact électrique extérieur (210b) relié électriquement, au niveau de l'extrémité extérieure (209b) de ladite pile à combustible supplémentaire (208), à l'autre parmi la cathode (208b) et l'anode (208a) de ladite pile à combustible supplémentaire (208).

3. Assemblage annulaire de piles à combustible à oxyde solide (204) selon la revendication 1 ou la revendication 2, **caractérisé en ce que** tous les contacts électriques intérieurs (210a) sont reliés électriquement à une anode (208a) et **en ce que** tous les contacts électriques extérieurs (210b) sont reliés électriquement à une cathode (208b).

4. Assemblage annulaire de piles à combustible à oxyde solide (204) selon la revendication 1 ou la revendication 2, **caractérisé en ce que** les contacts électriques (210a-b) sont agencés en alternance autour de l'axe longitudinal (X), **en ce que**, pour une première pile à combustible (208), un contact électrique intérieur (210a) est relié électriquement à l'anode (208a) de ladite première pile à combustible (208) et un contact électrique extérieur (210b) est relié électriquement à la cathode (208b) de ladite première pile à combustible (208), et **en ce que**, pour les deux piles à combustible (208) situées de part et d'autre de ladite première pile à combustible (208), un contact électrique intérieur (210a) est relié électriquement à la cathode (208b) de chacune desdites deux piles à combustible (208) et un contact électrique extérieur (210b) est relié électriquement à l'anode (208a) desdites deux piles à combustible (208).

5. Empilement (200) pour un moteur d'aéronef (202), comprenant plusieurs assemblages annulaires de piles à combustible à oxyde solide (204) selon l'une des revendications 1 à 4, les assemblages de piles à combustible (204) étant agencés les uns à la suite des autres le long de l'axe longitudinal (X).

6. Empilement (200) selon la revendication 5, **caractérisé en ce que**, pour chaque paire de deux assemblages de piles à combustible (204) successifs, l'empilement (200) comprend un échangeur de chaleur (160) agencé entre les deux assemblages de piles à combustible (204) et comprenant un évidement central supplémentaire (54) destiné à loger l'arbre moteur (52) du moteur d'aéronef (202).

7. Empilement (200) selon l'une des revendications 5 et 6, **caractérisé en ce qu'**il comprend des conduites d'hydrogène (212a) reliées fluidiquement entre le collecteur (204a-b) d'un assemblage de piles à combustible (204) comprenant une entrée d'hydrogène (206a) et l'entrée d'hydrogène (206a) du collecteur (204a-b) de l'assemblage de piles à combustible (204) suivant le long de l'axe longitudinal (X).

8. Empilement (200) selon l'une des revendications 5 à 7, **caractérisé en ce qu'**il comprend des conduites de fluide résiduel (212b) reliées fluidiquement entre le collecteur (204a-b) d'un assemblage de piles à combustible (204) comprenant une sortie d'hydrogène (206b) et la sortie d'hydrogène (206b) du collecteur (204a-b) de l'assemblage de piles à combustible (204) précédent le long de l'axe longitudinal (X).

9. Moteur d'aéronef (202) comprenant un arbre moteur (52) coaxial avec l'axe longitudinal (X), une conduite principale d'hydrogène (58), une conduite principale de fluide résiduel (60), une conduite principale d'hydrogène supplémentaire (59), une chambre de combustion (56) et un empilement (200) selon l'une des revendications 5 à 8, l'arbre moteur (52) étant agencé dans chaque collecteur annulaire intérieur (204a), la conduite principale d'hydrogène (58) étant reliée fluidiquement à chaque entrée d'hydrogène (206a) de l'empilement (200), la conduite principale de fluide résiduel (60) étant reliée fluidiquement entre chaque sortie d'hydrogène (206b) de l'empilement (200) et la chambre de combustion (56), et la conduite principale d'hydrogène supplémentaire (59) étant reliée fluidiquement entre les collecteurs (204b) de l'empilement (200) possédant une entrée d'hydrogène (206a) et la chambre de combustion (56).

10. Aéronef (1) comprenant un réservoir d'hydrogène (74) et au moins un moteur d'aéronef (202) selon la revendication 9, le réservoir d'hydrogène (74) étant relié fluidiquement à la conduite principale d'hydrogène (58).
